# EUROPÄISCHE PATENTSCHRIFT

(11) **EP 2 192 165 B1**
(45) Veröffentlichungstag und Bekanntmachung des Hinweises auf die Patenterteilung: **26.06.2013**
(21) Anmeldenummer: 08020509.9
(22) Anmeldetag: 26.11.2008
(51) Int. Cl.: B32B 17/10, B32B 27/38, C09D 163/00, C08J 7/04, D06N 3/12, B64C 27/473, F03D 1/06

(54) **Beschichteter Festigkeitsträger und Verfahren zu dessen Herstellung**
Coated rigidity support and method for its production
Support de solidité peint et son procédé de fabrication

(43) Veröffentlichungstag der Anmeldung: 02.06.2010
(73) Patentinhaber: Momentive Specialty Chemicals GmbH, 58642 Iserlohn-Letmathe (DE)
(72) Erfinder: Scheuer, Christoph, 46537 Dinslaken (DE)

(56) Entgegenhaltungen:
- WO-A-2006/043019
- WO-A-2008/104822
- DATABASE WPI Week 200439 Thomson Scientific, London, GB; AN 2004-414076 XP002535799 -& JP 2004 099814 A (TORAY IND INC) 2. April 2004 (2004-04-02)

## Beschreibung

Die Erfindung betrifft einen beschichteten Festigkeitsträger, ein Verfahren zu dessen Herstellung und Verwendung.

Wenn Festigkeitsträger mit einem duroplastischen Harz beschichtet werden sollen, müssen verschiedene Anforderungen an den Festigkeitsträger und an das Harz berücksichtigt werden. So sollen sich die Festigkeitsträger unkompliziert und mit möglichst wenig Zeitaufwand beschichten lassen. Allerdings sind den herkömmlichen Methoden zur Beschichtung von Festigkeitsträgern Schranken gesetzt, da durch die Mischungszusammensetzung von zumindest Harz, Härter und Beschleuniger verarbeitungstechnische Grenzen hinsichtlich Temperatur und Zeit vorgegeben sind.

In herkömmlicher Art und Weise können Festigkeitsträger, insbesondere für die Herstellung von großflächigen Bauteilen wie z.B. für Flügel für Windkraftanlagen oder für den Bootsbau, in der Handlaminiertechnik, in der Prepreg-Technologie oder aber auch mittels Infusionstechnik, beschichtet werden. Nachteilig bei all diesen Verfahren ist, dass für die Bereitstellung der Harzmischung, in der Regel ein Harz-Härter-Gemisch, eine Misch- und Dosiereinrichtung erforderlich ist. Diese muss gewährleisten, dass die Harzmischung in gleich bleibender Qualität hergestellt wird. Außerdem kann keine übergroße Menge an Harzmischung, die für die Herstellung z. B. eines Windflügels erforderlich sind, hergestellt werden, da die geringe Topfzeit des Harz-Härter-Gemisches dies nicht zulässt. Ein weiterer Nachteil ist, dass aufgrund der hohen Reaktivität der verwendeten Harz-Härter-Gemische verbunden mit dem hohen zeichen Aufwand der Injektion häufig eine ungleichmäßige Gelierung erzeugt wird, die zu erhöhten mechanischen Spannungen im fertigen Bauteil führt.
Es ist demnach die Bereitstellung von vielen kleineren Chargen erforderlich, die eine ständige Überwachung der Misch- und Dosiereinrichtung erforderlich macht.
Außerdem müssen die verwendeten Mischungen auch den Außentemperaturen der großen Produktionshallen angepasst sein, so dass verschiedene Mischungen jahreszeitlich bedingt verwendet werden müssen.

Aufgabe der hier vorliegenden Erfindung ist es nunmehr, beschichtete Festigkeitsträger, insbesondere für die Anwendung für großflächige Bauteile bereitzustellen, deren Beschichtung im Wesentlichen unabhängig von den verarbeitungsrelevanten Gegebenheiten der Komponenten der Harzmischung einfach und unkompliziert aufgebracht werden kann.

Gelöst wird diese Aufgabe dadurch, dass die Oberfläche der Festigkeitsträger eine Beschichtung aus einer Zusammensetzung aufweist, die eine Mischung 1 aus zumindest einem Harz ausgewählt aus der Gruppe der epoxidierten Phenolnovolake, epoxidierten Kresolnovolake, Polyepoxiden auf der Basis von Bisphenol-A, epoxidierten Fluorenbisphenolen (z.B. Polyepoxide auf der Basis von Tetrabrombisphenol-A) und/oder Polyepoxiden auf der Basis von Bisphenol-F und/oder auf der Basis von Triglycidylisocyanuraten und/oder epoxidierten Novolak und zumindest einer die Härtung des Harzes beschleunigende Komponente enthält und diese Mischung einer Wärmebehandlung unterzogen wird, so dass die Mischung 1 auf der Oberfläche des Festigkeitsträgers durch Aufschmelzen fixiert ist.

Der erfindungsgemäße Festigkeitsträger wird mit einer einfach herstellbaren Mischung aus Harz und Beschleuniger beschichtet. Die Zusammensetzung kann in herkömmlicher Art und Weise z. B. in Form von Streuen, Sprühen, Streichen, Rakeln oder mittels tnfusionstechnik aufgebracht werden. Entsprechend der verwendeten Harzkomponenten wird die Temperatur (ca. 40 - 150°C) der Wärmebehandlung so gewählt, dass auf der Oberfläche des Festigkeitsträgers ein Film der aufgeschmolzenen Zusammensetzung verbleibt,
Die Zusammensetzung ist lagerstabil, kann demnach vorgemischt und je nach Bedarf eingesetzt werden. Ein weiterer Vorteil besteht darin, dass auch der beschichtete Festigkeitsträger lagerstabil ist, so dass dieser vorgefertigt zur weiteren Produktionsstätte geliefert werden kann. Darüber hinaus erhöht die Beschichtung die Drapierfähigkeit und verbessert das Zuschneiden des Festigkeitsträgers.

Die Festigkeitsträger können in Form von Fasern, Gelegen, Vliesen, Gewirken oder Geweben verwendet werden und aus Glas, Keramik, Bor, Basalt und/oder Kohle und/oder synthetischen (z. B. Aramid) oder natürlichen Polymeren (z. B. Flachs, Baumwollfasern, Zellulose, Hanf, Sisal) gefertigt sein.

Als Harzkomponente werden epoxidierte Phenolnovolake (Kondensationsprodukt aus Phenol und z. B. Formaldehyd und/oder Glyoxal), epoxidierte Kresolnovolake, Polyepoxide auf der Basis von Bisphenol-A (z. B. auch Produkt aus Bisphenol A und Tetraglycidylmethylendiamin), epoxidierte Fluorenonbisphenole (z. B. Polyepoxide auf der Basis von Tetrabrombisphenol-A) und/oder Polyepoxide auf der Basis von Bisphenol-F und/oder epoxidierter Novolak und/oder Epoxidharze auf der Basis von Triglycidylisocyanurate verwendet.
Das mittlere Molekulargewicht all dieser Harze ist bevorzugt ≥ 600 g/mol, da es sich dann um Festharze handelt, die aufstreubar sind. Hierzu zählen u.a.:
Epikote® 1001, Epikote® 1004, Epikote® 1007, Epikote® 1009: Polyepoxide auf Basis von Bisphenol A, Epon® SU8 (epoxidierter Bisphenol-A Novolak), Epon® 1031 (epoxidierter Glyoxal-Phenol Novolak), Epon® 1163 (Polyepoxid auf Basis Tetrabrombisphenol-A), Epikote® 03243/LV (Polyepoxid auf Basis von (3,4-Epoxycyclohexyl)methyl 3,4-epoxycyclchexylcarboxylate und Bisphenol-A), Epon@ 164 (epoxidierter o-Kresotnovolak) - alle Produkte erhältlich bei Hexion Specialty Chemicals Inc.
Der Vorteil dieser verwendeten Harze ist, dass diese bei Raumtemperatur mahlbar und lagerfähig. Sie sind bei moderaten Temperaturen schmelzbar und mit dem in Mischung 2 enthaltenden Härter vernetzbar.

Als beschleunigende Komponente kommen z B. Imidazole, substituierte Imidazole, Imidazoladdukte, Imidazolkomplexe (z. B. Ni-Imidazolkomplex), tertiäre Amine, quaternäre Ammonium- und/oder Phosphoniumverbindungen, Zinn(IV)chlorid, Dicyandiamid, Salicylsäure, Hamstoff, Hamstoffderivate, Boririfluridkomplexe, Bortrichloridkomplexe, Epoxiadditions-Reaktionsprodukte, Tetraphenylenborkomplexe, Aminborate, Amintitanate, Metallacetylacetonate, Naphthensäuremetallsalze, Octansäuremetallsalze, Zinnoctoate, weitere Metallsalze und/oder Metallchelate, zum Einsatz. Beispielhaft sei an dieser Stelle weiterhin genannt: oligomere Polyethylenpiperazine, Dmethylaminopropyldpropanolamin. Bis-(dimethyleminopropyl)-amino-2-propanol. N,N'-Bis-(3-dimethylaminopropyl)urea, Mischungen aus N-(2-hydroxypropyl)imidazol, Dimethyl-2-(2-aminoethoxy)ethanol und Mischungen hiervon, Bis (2-dimethylaminoethyl)ether, Pentamethyldiethylentriamin. Dimorpholinodiethylether, 1,8 Diazabicyclo[5.4.0]undecen-7, N-Methylimidazol, 1,2 Dimethylimidazol, Triethylendiamin.
Die Beschleuniger ergeben zusammen mit den oben aufgeführten Harzen feste riesel- bzw. streufähige Gemische die bei Raumtemperatur über ein hinreichende bis herausragende Lagerstabilität verfügen.

Es ist weiterhin von Vorteil, wenn auf die fixierte Mischung 1 des Festigkeitsträgers eine Mischung 2 aufgebracht ist, wobei die Mischung 2 zumindest ein Harz ausgewählt aus der Gruppe der Polyepoxide auf der Basis von Bisphenol-A und/oder F, auf der Basis von Tetraglycidylmethylendiamin (TGMDA), auf der Basis von epoxidierten Fluorenonbisphenole (z. B. Tetrabrombisphenol-A) und/oder epoxidiertern Novolak und/oder Polyepoxidester auf der Basis von Phthalsäure, Hexahydrophthalsäure oder auf der Basis von Terephthalsäure, epoxidierte o- oder p-Aminophenole, epoxidierte Polyadditionsprodukte aus Dicyclopentadien und Phenol, Diglycidylether der Bisphenole, insbesondere der Bisphenole A und F und/oder daraus hergestellten Advancementharzen ist und zumindest einen Anhydridhärter und/oder Aminhärter enthält und dieser Verbund in der Hitze ausgehärtet wird. Das Epoxidäquivalentgewicht der Harze beträgt vorzugsweise 170 - 450 g.
Beispielhaft sei an dieser Stelle auch 2,2 Bis[3,5-dibromo-4-(2,3-epoxypropoxy)phenyl]propan, 2,2-Bis[4-(2,3-epoxypropoxy)cyclohexyl]propan, 4-Epoxyethyl-1,2-epoxycyclohexan oder das 3,4-Epcxycyclohexyl 3,4-epoxycyclohexancarboxylate [2386-87-0] genannt.
Diese Mischungen sind bevorzugt flüssig, um eine einfache Injektion zu gewährleisten.

Durch die einfache und ohne verarbeltungstechnische Schwierigkeiten verbundene Aufbringung des Harz-Härter-Gemisches wird letztendlich ein Festigkeitsträger erzielt, der den Ansprüchen bei der Herstellung und Verwendung in faserverstärkten Kunststoffen, wie z.B. in Rotorblättern für Windkraftanlagen, in der Luft- und Fahrzeugtechnik und im Bootsbau, gerecht wird.

Als Anhydridhärter der Mischung 2 soll vorzugsweise ein Dicarbonsäureanhydrid oder ein modifiziertes Dicarbonsäureanhydrid verwendet werden. Als Beispiele seien an dieser Stelle folgende Anhydride genannt: Tetra-hydrophthalsäure-anhydrid (THPA), Hexa-hydrophthalsäure-anhydrid (HHFA), Methyltetra-hydrophthalsäure-anhydrid (MTHPA), Methyl-hexa-hydrophthalsäure-anhydrid (MHHPA), Methylnadic-anhydrid (MNA), Dodiexenyl-bemsteinsäune-anhydrid (DBA) oder Gemische hiervon. Als modifizierte Dicarbonsäureanhydride kommen saure Ester (Reaktionsprodukte aus oben genannten Anhydriden oder deren Gemische mit Diolen oder Polyolen z.B.: Neopentylglykol (NPG), Polypropylenglykol (PPG, bevorzugt Molekulargewicht 200 bis 1000) zum Einsatz. Durch gezielte Modifizierung lässt sich ein weiter Bereich der Glasübergangstemperatur (zwischen 30 und 200 °C) einstellen.

Weiterhin können die Härter ausgewählt sein aus der Gruppe der Aminhärter, wiederum hiervon ausgewählt aus den Polyaminen (aliphatisch, cyloaliphatisch oder aromatisch), Polyamiden, Mannich Basen, Polyaminoimidazolin, Polyetheraminen und Mischungen hieraus. Beispielhaft sei an dieser Stelle die Polyetheramine, z. B. Jeffamine D230, D400 (Fa. Huntsman) genant, die sich durch eine geringe Exothermie auszeichnen. Die Polyamine z. B. lsophorondiamin besitzen einen hohen Tg-Wert und die Mannich Basen, z.B. Epikure 110 (Hexion Specially Chemicals Inc.) zeichnen sich durch eine geringe Carbamat Bildung und eine hohe Reaktivität aus.

Die für Mischung 2 verwendeten Harze können denen der Harze der Mischung 1 identisch sein. Es ist allerdings auch möglich für die Mischung 2 ein anderes Harz als für Mischung 1 zu verwenden.

Der Verbund bestehend aus dem Festigkeitsträger, der mit Mischung 1 und 2 beschichtet ist, wird in der Hitze bei ca. 40 - 200 °C, bevorzugt 80 -120 °C, unter herkömmlichen Bedingungen ausgehärtet.

ErfindungsgemäB wird weiterhin ein Verfahren zur Herstellung eines beschichteten Festigkeitsträgers dessen Oberfläche eine Beschichtung aus einer hitzehärtbaren Zusammensetzung aufweist, bereitgestellt, wobei auf den Festigkeitsträger eine Mischung 1 aus zumindest einem Harz ausgewählt aus epoxidierten Phenolnovolaken, epoxidierten Kresolnovolaken, Polyepoxiden auf der Basis von Bisphenol-A, epoxidierten Fluorenonbispheuole und/oder Polyepoxiden auf der Basis von Bisphenol-F, auf der Basis von Triglycidylisocyanuraten und/oder epoxidierten Novolaken und zumindest einer die Härtung des Harzes beschleunigende Komponente aufgebracht wird, anschließend der mit der Mischung 1 beschichtete Festigkeitsträger einer Wärmebehandlung unterzogen wird, so dass die Mischung 1 auf der Oberfläche des Festigkeitsträgers durch Aufschmelzen fixiert wird und danach eine Mischung 2 auf den mit der fixierten Mischung 1 beschichteten Festigkeitsträger aufgebracht wird, wobei die Mischung 2 zumindest ein Harz ausgewählt aus der Gruppe der Polyepoxide auf der Basis von Bisphenol A und/oder F und/oder daraus hergestellten Advancementharzen, auf der Basis von Tetraglycidylmethylendiamin, auf der Basis von epoxidierten Fluorenonbisphenole und/oder epoxidierten Novolake und/oder Polyepoxidestern auf der Basis von Phthalsäure, Hexahydrophthalsäure oder auf der Basis von Terephthalsäure, epoxidierten o- oder p-Aminophenolen, epoxidierten Polyadditionsprodukte aus Dicyclopentadien und Phenol und zumindest einen Anhydridhärter und/oder Aminhärter enlhält und dieser Verbund in der Hitze ausgehärtet wird.

Dieses Verfahren ermöglicht, dass auf eine Misch- und Dosiereinrichtung generell verzichtet werden kann, was Anschaffungs-, Bedien- und Wartungskosten spart. Weiterhin ist man zeitlich unabhängig von Verarbeitungsparametem. Es ist nunmehr möglich lange Verarbeitungszeiten mit einer kurzen Härtungszeit zu verbinden, was enorme Zeitansparung bei der Beschichtung der Festigkeitsträger mit sich bringt. Es kann in großer Menge sowohl Mischung 1 als auch Mischung 2 hergestellt, wobei aufgrund der Lagerbeständigkeit der Mischungen diese nicht vor Ort gemischt werden müssen.
Ein weiterer Vorteil des Verfahrens besteht darin, dass qualitativ gleichmäßigere Zusammensetzungen auf den Festigkeitsträger erreicht werden. Es wurde nämlich festgestellt, dass durch das Aufheizen während des Härtungsvorganges die beschleunigende Komponente freigesetzt wird, was eine hohe Reaktivität der Komponente bei der Herstellung der Zusammensetzung mit sich bringt. Dies wiederum gewährleistet einen gezielten Härtungsbeginn, was sich qualitativ auf die Homogenität und damit auf die Egenschaften der Zusammensetzung auswirkt.

Wie bereits eingangs erwähnt, wird der Festigkeitsträger aus Glas, Keramik, Bor, Kohle, Basalt und/oder synthetischen und/oder natürlichen Polymeren in Form von Fasern, Gelegen, Vliesen, Gewirken oder Geweben mit der Mischung 1 beschichtet. Hierzu wird die Mischung 1 in herkömmlichen Mischaggregaten, wie z.B. in einem Innenmischer, hergestellt. Es werden 50 bis 95 Gew.% zumindest eines Harzes der Mischung 1 mit 5 bis 50 Gew.% der beschleunigenden Komponente im Wesentlichen homogen vermischt. Als beschleunigende Komponente kommen z. B. Imidazole, substituierte Imidazole, Imidazoladdukte, Imidazolkomplexe (z. B. Ni-Imidazolkomplex), tertiäre Amine, quaternäre Ammonium- oder Phosphoniumverbindungen, Zinn(IV)chlorid, Dicyandiamid, Salicylsäure, Harnstoff, Harnstoffderivate oder Bortrifluridkomplexe zum Einsatz. Die Mischung 1 wird aus dem Mischaggregat ausgeworfen und gegebenenfalls gelagert, wobei die Lagerfähigkeit > 1 Jahr bei Temperaturen < 30 °C beträgt bzw. gegebenenfalls transportiert. Die Mischung 1 kann dann in herkömmlicher Art und Weise auf den Festigkeitsträger aufgebracht werden, z. B. durch Sprühen. Streichen, Rakeln oder mittels Infusionstechnik. Die Aufbringung durch Streuen ist bevorzugt, da das Material bereits an sich ein Pulver ist und somit unkompliziert verwendet werden kann. Bevorzugt ist, wenn die Mischung 1 mg bis 10 mg pro cm² Festigkeitsträger aufgebracht wird. In diesem Bereich bleibt der beschichtete Festigkeitsträger handelbar. Werden mehr als 10 mg an Mischung 1 pro cm² Festigkeitsträger aufgebracht, so läuft man Gefahr, dass die Beschichtung abbricht. Werden weniger als 1 mg pro cm² aufgebracht, ist der Beschleunigeranteil zu gering und die Prozesszeit verlängert sich entsprechen. Danach wird dieser Verbund einer Temperaturbehandlung unterzogen. Diese wird in einem Temperaturbereich 40 -150 °C z. B. in einem Durchlaufofen, Mikrowellendurchlaufofen oder aufgrund ihrer Effizienz bevorzugt mittels lnduktionserwärmung durchgeführt. Die Mischung 1 befindet sich im Wesentlichen homogen aufgeschmolzen und in gleichmäßiger Schichtdicke auf dem Festigkeitsträger,

Der so mit der Mischung 1 beschichtete Festigkeitsträger wird gegebenenfalls nach Lagerung platzsparend aufgerollt bzw. vorgeformt bzw. transportiert und mit der Mischung 2 beschichtet. Die Mischung 2 kann, wie bereits beschrieben bei Mischung 1, hergestellt werden. Dabei enthält die Mischung 2 bezogen auf die Masse aller Komponenten der Mischung 2 30 bis 70 Gew.% Harz und 30 bis 70 Gew.% Anhydridhärter oder Aminhärter oder Gemische hiervon. Anhydridhärter, sind bevorzugt. da diese als Einkomponentensystem bereitgestellt werden können und so auf eine Misch- und Dosieranlage verzichtet werden kann.

Von der Mischung 2 werden bevorzugt 10 mg bis 100 mg pro cm² Festigkeitsträger aufgebracht, was sich positiv auf die mechanische Festigkeit des Festigkeitsträgers auswirkt. Die Aufbringung der Mischung 2 kann ebenfalls durch Streuen, Sprühen, Streichen, Rakeln oder mittels Infusionstechnik erfolgen. Die Aushärtung der Zusammensetzung erfolgt in einem Temperaturbereich von 40 - 200 °C, bevorzugt 80 - 120 °C.

Die lnfusionstechnik ist bei der Aufbringung der Mischung 2 besonders bevorzugt. Mittels angelegten Unterdruck wird die flüssige Mischung auf den Festigkeitsträger aufgesogen. Somit kann diese in den Festigkeitsträger eindringen und eine homogene Qualität der Beschichtung wird gewährleistet.

Weiterhin ist es möglich, dass die Mischung 1 und/oder 2 weitere Zusatzstoffe wie z. B. Graphitpulver, Siloxane, Pigmente, Metalle (z. B. Aluminium, Eisen oder Kupfer) in Pulverform, bevorzugt Komgröße < 100 µm oder Metalloxide (z. B. Eisenoxid), Reaktiwerdünner (z. B. Glycidylether auf Basis von Fettalkoholen, Butandiol, Hexandiol, Polyglykole. Ethylhexanol, Neopentylglykol, Glycerin, Trimethylolpropan, Rizinusöl, Phenol, Kresol, p-tert. Butytphenol), UV-Schutzmittel oder Verarbeitungshitfsmittel enthält. Diese Zusatzstoffe werden bezogen auf die Mischung 1 in einer Konzentration von bis 2 Gew.% zugegeben und bezogen auf die Mischung 2 bis zu 15 Gew.%. Die Verwendung von Graphit, Metallen oder Metalloxiden ermöglichen aufgrund ihrer Leitfähigkeit die induktive Erwärmung der entsprechenden Mischung, wodurch eine signifikante Verkürzung der Härtungszeit bewirkt wird. Siloxane haben einen Einfluss auf eine verbesserte lmprägnierung und Faseranbindung, die letztendlich zu einer Verringerung der Fehlstellen im Verbund führen. Außerdem wirken Siloxane beschleunigend im lnfusionsprozess. Zusammenfassend kann ausgeführt werden, dass diese Zusatzstoffe als Verarbeitungshilfsmittel bzw. zum Stabilisieren der Mischungen oder als Farbgeber dienen.

Die erfindungsgemäßen beschichteten Festigkeitsträgers werden bevorzugt zur Herstellung von Rotorblättern für Windkraftanlagen, oder aber auch für die Bereitstellung von Bauteilen in der Luft- und Fahrzeugtechnik, im Automobilbau und im Bootsbau verwendet Gerade in diesen Bereichen müssen großflächige Bauteile bereitgestellt werden, die nunmehr verarbeitungstechnisch vorteilhaft hergestellt werden können.

Anhand eines Ausführungsbeispiels soll die Erfindung näher erläutert werden.
a) Beschichtung des Festigkeitsträgers mit Mischung 1:
   20 g eines Epoxid-Fest- Harzes (Epikote® 1004 - Produkt erhältlich bei Hexion Specialty Chemicals Inc.) werden zunächst zu einem Pulver gemörsert. 5 g Undecan substituiertes Imidazol (Curezol C11Z - Produkt erhältlich bei Fa. Shikoku Chemicals Corp.) werden zugegeben und durch weiteres Mörsern homogenisiert. Die so erhaltene Mischung 1 wird auf ein Glasfilamentgewebe 92115 (Fa.Lange + Ritter) aufgestreut, so dass das Glasfilamentgewebe mit der Mischung 1 in einer Konzentration von 2 mg/cm² Glasfilamentgewebe bedeckt ist. Dieser Verbund wird für 15 Minuten bei 70 °C in einen Induktionsofen gelegt. Nach dieser Zeit ist die Mischung 1 auf dem Glasfilamentgewebe aufgeschmolzen.
b) Beschichtung des mit der Mischung 1 beschichteten Festigkeitsträgers mit Mischung 2:
   4,5 g des mit der Mischung 1 beschichteten Glasfilamtgewebes werden mit 5,5 g (39,3 mg/cm²) (Epikote® 03957 - Gemisch aus Bisphenol-A-diglycidylether und Hexa-hydrophthalsäureanhydrid; Produkt erhältlich bei Hexion Specialty Chemicals Inc.) mittels herkömmlicher tnfusionstechnik imprägniert:
   Das trockene Glasfilamentgewebe wird in eine mit Trennmittel beschichtete Form gelegt. Das Gewebe wird mit einem Trenngewebe bzw. Folie bedeckt, was das gleichmäßige Fließen der Harzmischung (Mischung 2) erleichtert. Durch Anbringung eines Abdichtbandes wird die Folie gegen die Form abgedichtet, so dass mittels einer Vakuumpumpe (Drehschieberpumpe) das Gewebe evakuiert wird. Anschließend wird die Mischung 2 durch den anliegenden Unterdruck in das Gewebe gedrückt. Nachdem das Gewebe vollständig mit Mischung 2 durchtränkt ist, wird der Verbund durch Wärmezufuhr (8 Stunden bei 80 °C im Ofen) gehärtet.
oder
5,4 g des mit der Mischung 1 beschichteten Glasfilamtgewebes werden mit 6 g (35,8 mg/cm²) eines Gemisches 100 Teilen (Epikote® 845 - Gemisch aus Bisphenol-A-diglycidylether, Bisphenol-F-diglycidylether und Polypropylenglykol; Produkt erhältlich bei Hexion Specialty Chemicals Inc.) und 82 Teilen (Epikure® 845 - Gemisch aus Methyltetrahydrophthalsäureanhydrid und dem Reaktionsprodukt aus Tetrahydrophthalsäureanhydrid und Neopentylglykol: Produkt erhältlich bei Hexion Specialty Chemicals Inc.) wie bereits soeben beschrieben imprägniert. Der so erhaltene Verbund wird 10 Stunden bei 80 °C im Ofen gehärtet.

Das angegebene Ausführungsbeispiel ist im Labormaßstab durchgeführt und wurde durch großtechnische Versuche bestätigt.

Erhalten wird ein beschichteter Festigkeitsträger, der im Vergleich zu herkömmlichen Verfahren aufgrund seiner verarbeitungstechnischen Optimierung kostengünstig bereitgestellt werden kann. Die Verkürzung der Prozesszeiten (Reduzierung um bis zu 50%) führt zu einer signifikanten Steigerung der Produktivität bezogen auf die erforderlichen Formen.

## Patentansprüche

1. Verfahren zur Herstellung eines beschichteten Festigkeitsträgers dessen Oberfläche eine Beschichtung aus aus einer hitzehärtbaren Zusammensetzung aufweist, **dadurch gekennzeichnet, dass** auf den Festigkeitsträger eine Mischung 1 aus zumindest einem Harz ausgewählt aus epoxidierten Phenolnovolaken, epoxidierten Kresolnovolaken, Polyepoxiden auf der Basis von Bisphenol-A, epoxidierten Fluorenonbisphenole und/oder Polyepoxiden auf der Basis von Bisphenol-F , auf der Basis von Triglycidylisocyanuraten, und/oder epoxidierten Novolaken und zumindest einer die Härtung des Harzes beschleunigende Komponenete aufgebracht wird, anschließend der mit Mischung 1 beschichtete Festigkeitsträger einer Wärmebehandlung unterzogen wird, so dass die Mischung 1 auf der Oberfläche des Festigkeitsträgers durch Aufschmelzen fixiert wird und danach eine Mischung 2 auf den mit der fixierten Mischung 1 beschichteten Festigkeitsträger aufgebracht wird, wobei die Mischung 2 zumindest ein Harz ausgewählt aus der Gruppe der Polyepoxide auf der Basis von Bisphenol A und/oder F und /oder daraus hergestellten Advancementharzen, auf der Basis von Tetraglycidylmethylendiamin, auf der Basis von epoxidierten Fluorenonbisphenole und/oder epoxidierten Novolake und/oder Polyepoxidestern auf der Basis von Phthalsäure, Hexahydrophthalsäure oder auf der Basis von Terephthalsäure, epoxidierte o- oder p-Aminophenole, epoxidierte Polyadditionsprodukte aus Dicyclopentadien und Phenol und zumindest einen Anhydridhärter und/oder Aminhärter enthält und dieser Verbund mittels Hitze ausgehärtet ist.

2. Verfahren nach Anspruch 1, **dadurch gekennzeichnet, dass** die Mischung 1 als beschleunigende Komponente ein Imidazol, substituertes Imidazol, Imidazoladdukte, Imidazolkomlexe, tertiäre Amine, quaternäre Ammonium- oder Phosphoniumverbindungen, Zinn(IV)chlorid, Dicyandiamid, Salicylsäure, Harnstoff, Harnstoffderivate, Bortrifluridkomplexe, Bortrichloridkomplexe, Epoxiadditions-Reaktionsprodukte, Tetraphenylenborkomplexe, Aminborate, Amintitanate, Metallacetylacetonate, Naphthensäuremetallsalze, Octansäuremetallsize, Zinnoctoate, Metallsalze und/oder Metallchelate verwendet wird.

3. Verfahren nach Anspruch 1 und/oder 2, **dadurch gekennzeichnet, dass** der Anhydridhärter der Mischung 2 ein Dicarbonsäureanhydrid oder ein modifiziertes Dicarbonsäureanhydrid ist.

4. Verfahren nach zumindest einem der vorhergehenden Ansprüche, **dadurch gekennzeichnet, dass** der Aminhärter ausgewählt ist aus Polyaminen, Polyamiden, Mannich Basen, Polyaminoimidazolinen, Polyetheraminen und Mischungen hieraus.

5. Verfahren nach zumindest einem der vorhergehenden Ansprüche, **dadurch gekennzeichnet, dass** die Mischung 1 und/oder 2 mittels Infusionstechnik auf den Festigkeitsträger aufgebracht wird.

6. Verfahren nach zumindest einem der vorhergehenden Ansprüche, **dadurch gekennzeichnet, dass** der Festigkeitsträger in Form von Fasern, Gelegen, Vliesen, Gewirken oder Geweben verwendet wird.

7. Verfahren nach zumindest einem der vorhergehenden Ansprüche, **dadurch gekennzeichnet, dass** als Festigkeitsträger ein Festigkeitsträger aus Glas, Keramik, Bor, Kohle, Basalt und/oder synthetischen oder natürlichen Polymeren verwendet wird.

8. Verfahren nach zumindest einem der vorhergehenden Ansprüche, **dadurch gekennzeichnet, dass** die Mischung 1 bezogen auf die Masse aller Komponenten 50 bis 95 Gew.% Harz und 5 bis 50 Gew.% beschleunigende Komponente aufweist.

9. Verfahren nach zumindest einem der vorhergehenden Ansprüche, **dadurch gekennzeichnet, dass** die Mischung 2 bezogen auf die Masse aller Komponenten 30 bis 70 Gew.% Harz und 30 bis 70 Gew.% Anhydridhärter oder Aminhärter oder Gemische hiervon aufweist.

10. Verfahren nach zumindest einem der vorhergehenden Ansprüche, **dadurch gekennzeichnet, dass** die Mischung 11 mg bis 10 mg pro cm² Festigkeitsträger aufgebracht wird.

11. Verfahren nach zumindest einem der vorhergehenden Ansprüche, **dadurch gekennzeichnet, dass** die Mischung 210 mg bis 100 mg pro cm² Festigkeitsträger aufgebracht wird.

12. Verfahren nach zumindest einem der vorhergehenden Ansprüche, **dadurch gekennzeichnet, dass** der Mischung 1 und/oder 2 weitere Zusatzstoffe wie z. B. Graphitpulver, Siloxane, Pigmente, Metalle oder Metalloxide, Reaktiwerdünner, Verarbeitungshilfsmittel oder UV-Schutzmittel zugegeben werden.

## Claims

1. Method for producing a coated reinforcement whose surface has a coating of a heat-curable composition, **characterized in that** a mixture 1 of at least one resin selected from expoxidized phenol novolaks, epoxidized cresol novolaks, polyepoxides on the basis of bisphenol A, epoxidized fluorenonebisphenols and/or polyepoxides on the basis of bisphenol F, on the basis of triglycidyl isocyanurates and/or epoxidized novolaks, and at least one component accelerating the curing of the resin, is applied to the reinforcement; subsequently the reinforcement coated with the mixture 1 is subjected to a heat treatment, and so the mixture 1 is fixed on the surface of the reinforcement by melting; and thereafter a mixture 2 is applied to the reinforcement coated with the fixed mixture 1, the mixture 2 comprising at least one resin selected from the group consisting of polyepoxides on the basis of bisphenol A and/or F and/or advancement resins prepared therefrom, on the basis of tetraglycidylmethylenediamine, on the basis of epoxidized fluorenonebisphenols and/or epoxidized novolaks and/or polyepoxide esters on the basis of phthalic acid, hexahydrophthalic acid or on the basis of terephthalic acid, epoxidized o- or p-aminophenols, epoxidized polyaddition products of dicyclopentadiene and phenol, and at least one anhydride curative and/or amine curative, and this assembly is cured with heating.

2. Method according to Claim 1, **characterized in that** the mixture 1 uses, as accelerating component, an imidazole, substituted imidazole, imidazole adducts, imidazole complexes, tertiary amines, quaternary ammonium or phosphonium compounds, tin(IV) chloride, dicyandiamide, salicylic acid, urea, urea derivatives, boron trifluoride complexes, boron trichloride complexes, epoxy addition reaction products, tetraphenylene-boron complexes, amine borates, amine titanates, metal acetylacetonates, naphthenic metal salts, octanoic metal salts, tin octoates, metal salts and/or metal chelates.

3. Method according to Claim 1 and/or 2, **characterized in that** the anhydride curative of the mixture 2 is a dicarboxylic anhydride or a modified dicarboxylic anhydride.

4. Method according to at least one of the preceding claims, **characterized in that** the amine curative is selected from polyamines, polyamides, Mannich bases, polyaminoimidazolines, polyetheramines, and mixtures thereof.

5. Method according to at least one of the preceding claims, **characterized in that** the mixture 1 and/or 2 is applied by an infusion technique to the reinforcement.

6. Method according to at least one of the preceding claims, **characterized in that** the reinforcement is used in the form of fibers, scrims, nonwovens, knits or wovens.

7. Method according to at least one of the preceding claims, **characterized in that** as reinforcement a reinforcement made of glass, ceramic, boron, carbon, basalt and/or synthetic or natural polymers is used.

8. Method according to at least one of the preceding claims, **characterized in that** the mixture 1, based on the mass of all of the components, comprises 50% to 95% by weight of resin and 5% to 50% by weight of accelerating component.

9. Method according to at least one of the preceding claims, **characterized in that** the mixture 2, based on the mass of all of the components, comprises 30% to 70% by weight of resin and 30% to 70% by weight of anhydride curative or amine curative or mixtures thereof.

10. Method according to at least one of the preceding claims, **characterized in that** the mixture 1 is applied 1 mg to 10 mg per cm² of reinforcement.

11. Method according to at least one of the preceding claims, **characterized in that** the mixture 2 is applied 10 mg to 100 mg per cm² of reinforcement.

12. Method according to at least one of the preceding claims, **characterized in that** mixture 1 and/or 2 are/is admixed with further additives such as, for example, graphite powders, siloxanes, pigments, metals or metal oxides, reactive diluents, processing assistants or UV protectants.

## Revendications

1. Procédé pour la fabrication d'un support de renforcement revêtu dont la surface présente un revêtement en une composition thermodurcissable, **caractérisé en ce qu'**on applique, sur le support de renforcement, un mélange 1, constitué par au moins une résine choisie parmi les novolaques de phénol époxydées, les novolaques de crésol époxydées, les polyépoxydes à base de bisphénol-A, les fluorénone-bisphénols époxydés et/ou les polyépoxydes à base de bisphénol-F, à base de triglycidylisocyanurates et/ou de novolaques époxydées et au moins un composé accélérant le durcissement de la résine, on soumet ensuite le support de renforcement revêtu du mélange 1 à un traitement thermique, de telle sorte que le mélange 1 est fixé par fusion sur la surface du support de renforcement, puis on applique un mélange 2 sur le support de renforcement revêtu du mélange 1 fixé, le mélange 2 contenant au moins une résine choisie dans le groupe des polyépoxydes à base de bisphénol A et/ou F et/ou les résines à chaîne allongée préparées à partir de ceux-ci, à base de tétraglycidylméthylènediamine, à base de fluorénone-bisphénols époxydés et/ou de novolaques époxydées et/ou de polyépoxyde-esters à base d'acide phtalique, d'acide hexahydrophtalique ou à base d'acide téréphtalique, d'o-aminophénols ou de p-aminophénols époxydés, de produits de polyaddition époxydés de dicyclopentadiène et de phénol et au moins un durcisseur de type anhydride et/ou de type amine et ce composite est durci à la chaleur.

2. Procédé selon la revendication 1, **caractérisé en ce qu'**on utilise dans le mélange 1 comme composant accélérateur un imidazole, un imidazole substitué, des produits d'addition d'imidazole, des complexes d'imidazole, des amines tertiaires, des composés d'ammonium ou de phosphonium quaternaire, le chlorure d'étain (IV), le dicyanodiamide, l'acide salicylique, l'urée, les dérivés d'urée, les complexes de trifluorure de bore, les complexes de trichlorure de bore, les produits de réactions d'époxyaddition, les complexes de tétraphénylène-bore, les aminoborates, les aminotitanates, les acétylacétonates métalliques, les sels métalliques de l'acide naphténique, les sels métalliques de l'acide octanoïque, les octoates d'étain, les sels métalliques et/ou les chélates métalliques.

3. Procédé selon la revendication 1 et/ou 2, **caractérisé en ce que** le durcisseur de type anhydride du mélange 2 est un anhydride d'acide dicarboxylique ou un anhydride d'acide dicarboxylique modifié.

4. Procédé selon au moins l'une quelconque des revendications précédentes, **caractérisé en ce que** le durcisseur de type amine est choisi parmi les polyamines, les polyamides, les bases de Mannich, les polyamino-imidazolines, les polyétheramines et leurs mélanges.

5. Procédé selon au moins l'une quelconque des revendications précédentes, **caractérisé en ce que** le mélange 1 et/ou 2 est appliqué au moyen d'une technique d'infusion sur le support de renforcement.

6. Procédé selon au moins l'une quelconque des revendications précédentes, **caractérisé en ce que** le support de renforcement est utilisé sous forme de fibres, de non-tissés, de voiles, de tricots ou de tissus.

7. Procédé selon au moins l'une quelconque des revendications précédentes, **caractérisé en ce qu'**on utilise comme support de renforcement un support de renforcement en verre, céramique, bore, carbone, basalte et/ou en polymères synthétiques ou naturels.

8. Procédé selon au moins l'une quelconque des revendications précédentes, **caractérisé en ce que** le mélange 1 présente, par rapport à la masse de tous les composants, 50 à 95% en poids de résine et 5 à 50% en poids de composant accélérateur.

9. Procédé selon au moins l'une quelconque des revendications précédentes, **caractérisé en ce que** le mélange 2 présente, par rapport à la masse de tous les composants, 30 à 70% en poids de résine et 30 à 70% en poids de durcisseur de type anhydride ou de type amine ou leurs mélanges.

10. Procédé selon au moins l'une quelconque des revendications précédentes, **caractérisé en ce que** le mélange 1 est appliqué à raison de 1 mg à 10 mg par cm² de support de renforcement.

11. Procédé selon au moins l'une quelconque des revendications précédentes, **caractérisé en ce que** le mélange 2 est appliqué à raison de 10 mg à 100 mg par cm² de support de renforcement.

12. Procédé selon au moins l'une quelconque des revendications précédentes, **caractérisé en ce que** le mélange 1 et/ou le mélange 2 sont additionnés d'autres additifs, tels que par exemple les poudres de graphite, les siloxanes, les pigments, les métaux ou les oxydes métalliques, les diluants réactifs, les adjuvants de transformation ou les agents de protection contre les UV.
